# EUROPEAN PATENT APPLICATION

(11) **EP 4 290 761 A1**
(43) Date of publication of application: **13.12.2023**
(21) Application number: 23727190.3
(22) Date of filing: 04.04.2023
(51) Int. Cl.: H02S 20/10

(54) **SUPPORT SYSTEM OF PHOTOVOLTAIC MODULE**

(30) Priority: 27.04.2022 CN 202210453963
(71) Applicant: Jiangsu Dongci New Energy Technology Co., Ltd, Suqian, Jiangsu 223907 (CN); Hengdian Group DMEGC Magnetics Co., Ltd., Jinhua, Zhejiang 322118 (CN)
(72) Inventor: LOU, Caoxin, Dongyang City, Jinhua, Zhejiang 322118 (CN); REN, Hailiang, Dongyang City, Jinhua, Zhejiang 322118 (CN); WU, Yuche, Dongyang City, Jinhua, Zhejiang 322118 (CN); WANG, Tingting, Dongyang City, Jinhua, Zhejiang 322118 (CN); ZHAO, Jing, Dongyang City, Jinhua, Zhejiang 322118 (CN); LU, Junliang, Dongyang City, Jinhua, Zhejiang 322118 (CN)
(74) Representative: Cabinet Beaumont
(86) International application number: PCT/CN2023/086152
(87) International publication number: WO 2023/207528

(57) **Abstract**

Provided is a photovoltaic assembly support system. The photovoltaic assembly support system is configured for installing and supporting a photovoltaic panel and mainly includes a main support, a first propping support and a second propping support. The first propping support and the second propping support extend from the main support. The first propping support is configured to support a side frame of the photovoltaic panel, and the second propping support is configured to support an upper frame of a photovoltaic panel. The first propping support is in a shape of an inverted character " 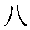 ", and two ends of the main support are arranged to extend out to form lifting portions respectively, and the lifting portions are configured for lifting the main support.

## Description

The present disclosure claims priority to Chinese Patent Application No. 202210453963.1, filed with the China National Intellectual Property Administration (CNIPA) on Apr. 27, 2022, the disclosure of which is incorporated herein by reference in its entirety.

### TECHNICAL FIELD

The present application relates to the field of photovoltaic technology, for example, to a photovoltaic assembly support system.

### BACKGROUND

A photovoltaic assembly support system in the related art imposes stringent requirement on installation, that is, the installation operation can be performed only at the installation position, and when to install the photovoltaic assembly support system on an inclined roof or a shed-like structure, the installation may be highly difficult and safety issues are apt to occur, such that the photovoltaic assembly support system in the related art is limited in use. Moreover, the support system of character "A"-shaped photovoltaic assemblies in the related art cannot be turned, in this way, it is impossible to allow the light-receiving surfaces of photovoltaic panels to sufficiently absorb the sunlight, therefore, the power generation efficiency of the photovoltaic panels are reduced, and the cost is increased. In addition, the supports for supporting a long side or a short side of a photovoltaic panel are generally two separate parts, and thus the structure is scattered and unstable, so that the danger of unstable shaking and even collapse is apt to occur.

### SUMMARY

A photovoltaic assembly support system is provided according to the present application, the photovoltaic assembly support system has a simple structure, is easy to install, is flexible and has a high applicability, is capable of improving the power generation amount of a photovoltaic panel, and saves the cost.

A photovoltaic assembly support system is provided according to the present application. The photovoltaic assembly support system is for installing and supporting a photovoltaic panel. The photovoltaic assembly support system includes a main support, a first propping support and a second propping support. The first propping support extends out from the main support, and the first propping support is in a shape of an inverted character " 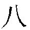 " and is configured to support a side frame of the photovoltaic panel. The second propping support extends out from the main support and is configured to support an upper frame of the photovoltaic panel. Two ends of the main support are arranged to extend out to form lifting portions respectively, and the lifting portions are configured for lifting the main support.

### BRIEF DESCRIPTION OF DRAWINGS

In order to explain the technical solutions in embodiments of the present application, the drawings that are required to be used in the description of embodiments of the present application are described hereinafter, and the drawings in the following description merely depict some embodiments of the present application, and other drawings may also be obtained on the basis of the contents of the embodiments of the present application and these drawings by the person of ordinary skill in the art without making creative efforts.
FIG. 1 is a schematic structural diagram of a photovoltaic assembly support system having a trapezoidal second propping support according to an embodiment of the present application being installed on a vehicle shed;
FIG. 2 is a schematic structural diagram of a photovoltaic assembly support system having a trapezoidal second propping support according to an embodiment of the present application;
FIG. 3 is a partially enlarged view of portion A in FIG. 2;
FIG. 4 is a partially enlarged view of portion B in FIG. 2;
FIG. 5 is a schematic structural diagram of a photovoltaic assembly support system having a trapezoidal second propping support according to an embodiment of the present application being turned by a certain angle;
FIG. 6 is a schematic structural diagram of a photovoltaic assembly support system having a character "Y"-shaped second propping support according to an embodiment of the present application;
FIG. 7 is a schematic structural diagram of a waterproof component according to an embodiment of the present application being installed on an upper frame;
FIG. 8 is a schematic structural diagram of a waterproof component according to an embodiment of the present application being installed on a side frame; and
FIG. 9 is a schematic structural diagram of a photovoltaic assembly support system having a transverse brace according to an embodiment of the present application.

### Reference numerals list

- 100: photovoltaic panel
- 110: side frame
- 120: upper frame
- 200: main support
- 210: first propping support
- 2101: first fixing member
- 2102: first pressing block
- 220: second propping support
- 2201: second fixing member
- 2202: second pressing block
- 2203: stiffener
- 2204: barb
- 230: lifting portion
- 2301: lifting rope
- 240: driving device
- 250: transverse brace
- 300: pier foot
- 310: first position-limiting portion
- 320: second position-limiting portion
- 400: counterweight block
- 500: waterproof component

### DETAILED DESCRIPTION

In the description of the present application, unless otherwise expressly specified and limited, the term "connected to each other", "connected", or "fixed" is to be construed in a broad sense, for example, as securely connected, detachably connected, or integrated; mechanically connected or electrically connected; directly connected to each other, indirectly connected to each other via an intermediary, internal connection between two components, or interaction between two components. For those of ordinary skill in the art, specific meanings of the preceding terms in the present application may be understood based on specific situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of this embodiment, the orientational or positional relationships indicated by terms "above", "below", "left", "right", and the like are based on the orientational or positional relationships shown in the drawings, and are merely for ease of description and simplifying an operation, rather than indicating or implying that the referred device or element must have a specific orientation and be constructed and operated in a specific orientation. Moreover, the terms "first" and "second" are used only to distinguish between descriptions and have no special meaning.

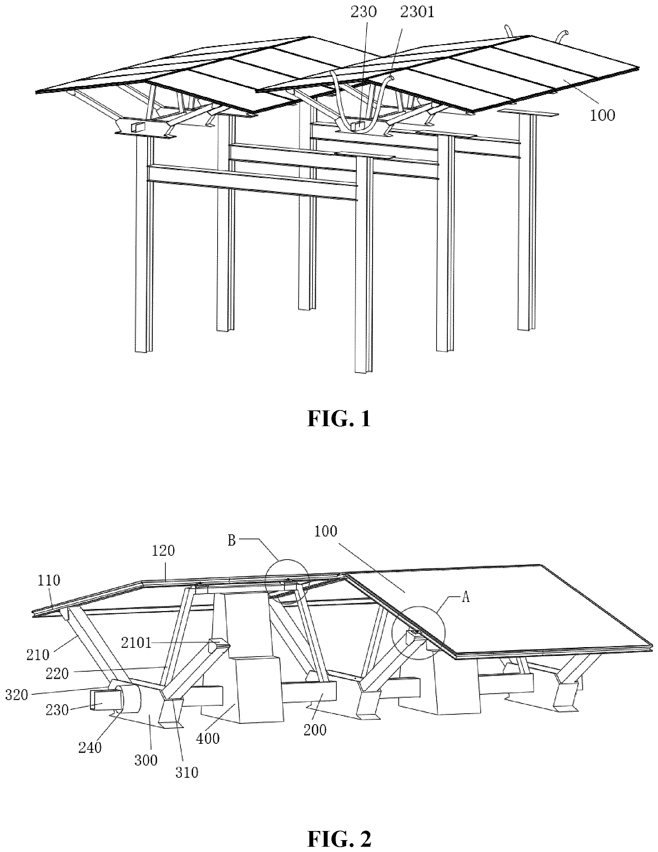

As shown in FIG. 1 and FIG. 2, a photovoltaic assembly support system is provided according to this embodiment, for installing and supporting a photovoltaic panel 100. The photovoltaic assembly support system mainly includes a main support 200, a first propping support 210 and a second propping support 220. The first propping support 210 and the second propping support 220 are each arranged to extend out from the main support 200. The first propping support 210 is configured to support a side frame 110 of the photovoltaic panel 100, and the second propping support 220 is configured to support an upper frame 120 of the photovoltaic panel 100. Optionally, the first propping support 210 in this embodiment is in a shape of an inverted character " 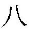 ", and two ends of the main support 200 are arranged to extend out to form lifting portions 230 respectively, and the lifting portions 230 are configured for lifting the main support 200.

Based on the above design, the main support 200, the first propping support 210 and the second propping support 220 in this embodiment are integrally formed, in this way, the stability and reliability of the photovoltaic assembly support system can be improved. In this embodiment, the first propping support 210 is configured to be in the shape of the inverted character " 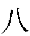 ", which is conductive to supporting photovoltaic panels 100 in a shape of a character "A" (two photovoltaic panels 100 are at a certain angle). Apparently, the first propping support 210 in the shape of the inverted character " 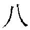 " in this embodiment may support a single photovoltaic panel 100 as well, simply supporting the photovoltaic panels 100 in the character " 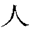 " shape is taken as an example in this embodiment for elaborating.

It may be understood that with the arrangement of the main support 200, the first propping support 210 and the second propping support 220 integrally formed, the stability and reliability of the photovoltaic assembly support system are improved. The lifting portions 230 are provided, so that the photovoltaic assembly support system can have its main body assembled on the ground, and then be connected and fixed to a shed-like structure of a building by means of lifting, thereby improving the flexibility and applicability of the photovoltaic assembly support system and reducing the installation difficulty.

As shown in FIG. 1, when the photovoltaic assembly support system is required to be installed on a vehicle shed, an operator can hook a lifting rope 2301 on the lifting portions 230, and then install the photovoltaic assembly support system on an upright post of the vehicle shed by using an external lifting apparatus such as a hoist or a crane. Apparently, the photovoltaic panels 100 have been installed on the photovoltaic assembly support system before the lifting apparatus lifts the photovoltaic assembly support system.

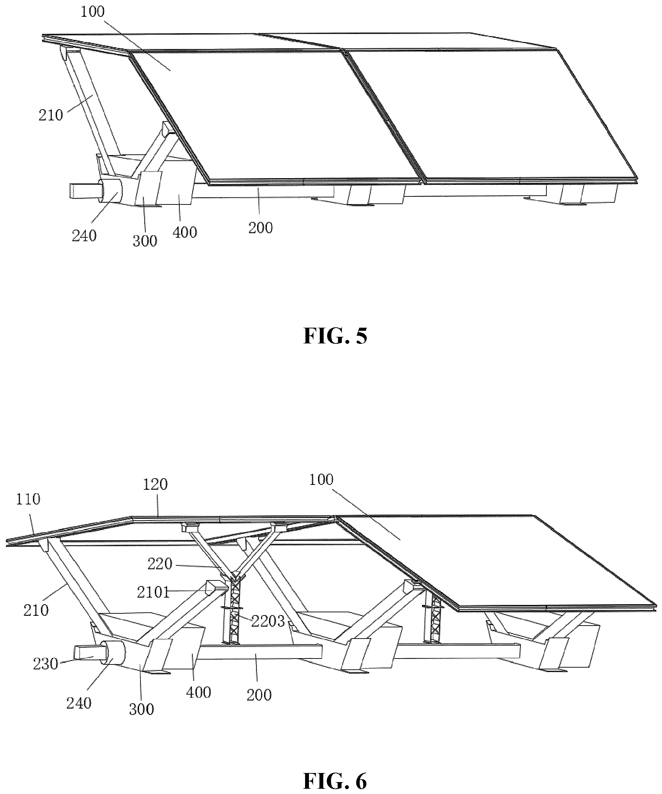

As shown in FIG. 2 and FIG. 5, in this embodiment, a driving device 240 is provided on the main support 200, and the driving device 240 is configured to drive the main support 200 to turn along an axis of the main support 200. A pier foot 300 is provided on the main support 200, and the first propping support 210 is arranged to extend out from the pier foot 300 of the main support 200. Optionally, in this embodiment, the driving device 240 is embodied as a motor. The operating frequency and the speed of the motor are adjusted, and the main support 200 is driven to turn, thereby driving the first propping support 210 and the second propping support 220 to turn, so that the photovoltaic assembly support system can track the motion track of the sun, so as to increase the radiation amount received by the photovoltaic panel 100, and further increase the power generation amount of the photovoltaic panel 100.

In an embodiment, in this embodiment, the operator may install and arrange a post (or a holder) below the driving device 240. The post is fixedly connected to the driving device 240, that is, the post supports and fixes the driving device 240, and an output shaft of the driving device 240 is connected to the main support 200, so that the driving device 240 can drive the main support 200 to turn along the axis of the main support 200, thereby realizing the turning of the photovoltaic panel 100, which enables the photovoltaic assembly support system to track the sunlight uniaxially, such that the power generation efficiency of the photovoltaic panel 100 can be improved, and the cost can be saved. It is to be noted that the main body structure of the present application may be directly installed on the ground or the flat roof, or may be lifted to the top of a building such as a vehicle shed after being assembled. For example, in FIG. 2, the following two manners of connecting and fixing to the post after being lifted are provided: in a first manner, the post is fitted with and fixed to the pier foot 300, which corresponds to the fixed installation; and in a second manner, the post is fitted with and fixed to the driving device 240, which corresponds to the uniaxial tracking installation.

In an embodiment, as shown in FIG. 2, the pier foot 300 in this embodiment includes a first position-limiting portion 310 and a second position-limiting portion 320. The first position-limiting portion 310 and the second position-limiting portion 320 are both configured to perform position-limiting on the first propping support 210, so as to avoid the risk that the photovoltaic assembly support system is out of balance and thus is turned over due to an excessive turning angle of the photovoltaic panel 100. Optionally, an included angle between the single photovoltaic panel 100 and the horizontal ground in this embodiment is set to range from 0 degrees to 45 degrees, so that not only the aesthetic appearance of the character "A"-shaped photovoltaic panels 100 can be improved, but also the power generation amount can be improved.

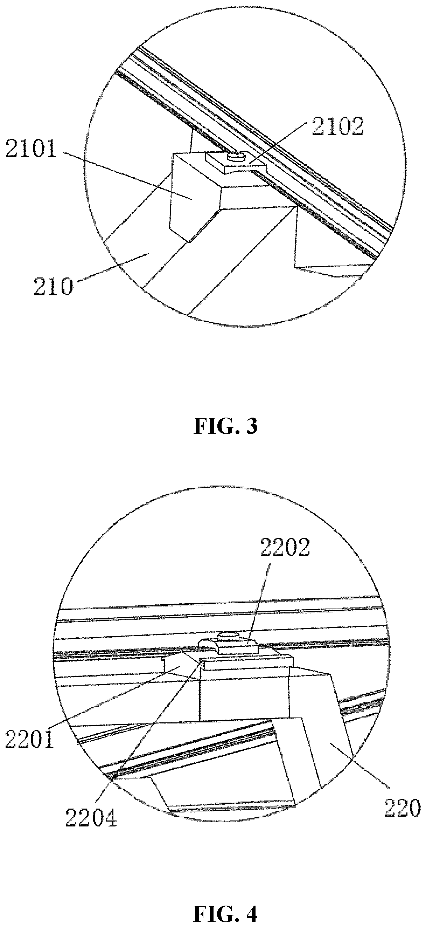

As shown in FIG. 2 to FIG. 4, in this embodiment, the first propping support 210 is connected to the side frame 110 through a first fixing member 2101. A first pressing block 2102 is provided on the first fixing member 2101, and the first pressing block 2102 is configured to fix the side frame 110 onto the first fixing member 2101. When the first propping support 210 is arranged between two adjacent photovoltaic panels 100, and in this case, the first propping support 210 can be used to support two adjacent side frames 110, the first fixing member 2101 fixes each of the two side frames 110 to the first pressing block 2102, so that the first propping support 210 can support the two adjacent side frames 110 simultaneously. Optionally, a bolt is arranged on the first pressing block 2102, and the bolt can pass through the first pressing block 2102 to be connected to the first fixing member 2101.

As shown in FIG. 2 to FIG. 4, in this embodiment, the second propping support 220 is trapezoidal, and the second propping support 220 is connected to the upper frame 120 through a second fixing member 2201. A second pressing block 2202 is provided on the second fixing member 2201, and the second pressing block 2202 is configured to fix the upper frame 120 onto the second fixing member 2201. Optionally, two second pressing blocks 2202 and two second fixing members 2201 are provided, in this way, the stability and reliability of the supporting to the upper frame 120 of the photovoltaic panel 100 by the second propping support 220 can be improved. The two second fixing members 2201 and the two second pressing blocks 2202 are arranged at ends of the second propping support 220 respectively, to thereby improving the stability of the second propping support 220.

In an embodiment, as shown in FIG. 2, the photovoltaic assembly support system in this embodiment includes a counterweight block 400, a lower end surface of the counterweight block 400 abuts against the ground or a roof plane, and the main support 200 is arranged to pass through the counterweight block 400. The counterweight block 400 is provided so that the stability of the photovoltaic assembly support system can be improved and the phenomenon that the photovoltaic assembly support system is shaken or even is turned over under severe weather such as strong wind is avoided. The operator can flexibly adjust the setting position of the counterweight block 400 and the volume size of the counterweight block 400 according to the practical on-site operation situation. Exemplarily, as shown in FIG. 2, the counterweight block 400 may be arranged directly below the second propping support 220, so that it can effectively support the second propping support 220. Moreover, the second propping support 220 is partially embedded in an upper surface of the counterweight block 400, which can effectively improve the stability of the second propping support 220. As shown in FIG. 5 and FIG. 6, the counterweight block 400 may also be arranged on a side of the pier foot 300 and closely fit against the pier foot 300.

It should be noted that the counterweight block 400 in this embodiment is applicable to structures such as a ground or a planar roof that are not suitable for using bolts to fix. However, as shown in FIG. 1, in an application environment such as a vehicle shed, it is generally not necessary to use the counterweight block 400, and it is possible to directly connect and fix structures such as the main support 200 and the pier foot 300 to the upright post and a cross beam of the vehicle shed, thereby reducing the mechanical load of the upright post and the cross beam of the vehicle shed, and prolonging the service life of the vehicle shed.

Optionally, as shown in FIG. 6, the second propping support 220 in this embodiment is in a shape of a character "Y", and the second propping support 220 is connected to the upper frame 120 through the second fixing members 2201. The second propping support 220 is further provided with a stiffener 2203 to improve the mechanical load resistance strength of the second propping support 220. A barb 2204 is provided on the second fixing member 2201, the barb 2204 can be engaged with the upper frame 120 of the photovoltaic panel 100, thereby improving the stability and reliability of the connection. Apparently, the operator may set the second propping support 220 to be other shapes according to practical requirements.

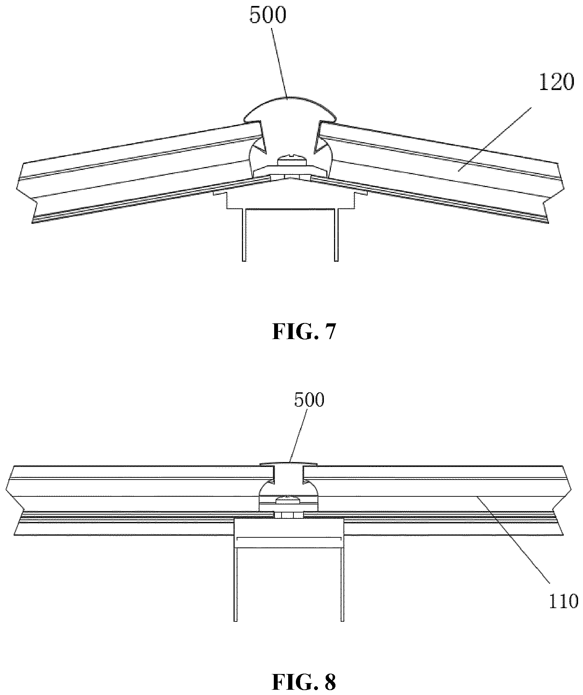

Optionally, as shown in FIG. 7 and FIG. 8, in this embodiment, for a vehicle shed application having waterproof requirements, waterproof components 500 may be provided on the side frame 110 and the upper frame 120 of the photovoltaic panel 100 before the lifting is performed, thereby preventing the rainwater from being deposited in the photovoltaic assembly support system.

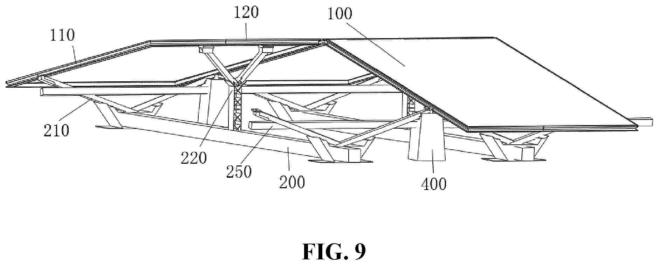

In addition, as shown in FIG. 9, the operator may additionally provide a transverse brace 250 to the photovoltaic assembly support system according to practical requirements. Exemplarily, the transverse brace 250 is additionally arranged between two adjacent first propping supports 210, so that the load resistances of the first propping supports 210 are improved, and thus the mechanical strength of the photovoltaic assembly support system is improved. In addition to reinforcing the mechanical strength of the photovoltaic assembly support system, the transverse brace 250 may further be connected and fixed to the counterweight block 400 to increase the self-weight of the photovoltaic assembly support system. In a case where the photovoltaic assembly support system is applied to the vehicle shed or roof structure, two ends of the transverse brace 250 may be used as the lifting portions 230 when the photovoltaic assembly support system is lifted by the crane, thereby facilitating the lifting of the photovoltaic assembly support system.

With continued reference to FIG. 9, the operator may arrange the main support 200 to be perpendicular or parallel to the upper frame 120 of the photovoltaic panel 100 according to practical requirements. FIG. 9 shows a situation that the main support 200 is arranged to be perpendicular to the upper frame 120. FIG. 2 shows a situation that the main support 200 is arranged to be parallel to the upper frame 120. Apparently, in other embodiments of the present application, the main support 200 may also be arranged to be at any angle with respect to the upper frame 120.

It should be noted that in the description of this specification, the terms "some embodiments" and "other embodiments" herein mean that specific features, specific structures, specific materials, or specific characteristics described in connection with an embodiment or example are included in at least one embodiment or example of the present application. In this description, illustrative expressions of these terms do not necessarily refer to the same embodiment or example. Moreover, the specific features, the specific structures, the specific materials, or the specific characteristics described may be combined in any one or more embodiments or examples in any suitable manner.

## Claims

1. A photovoltaic assembly support system, for installing and supporting a photovoltaic panel (100) and comprising:
a main support (200), a first propping support (210) and a second propping support (220), wherein,
the first propping support (210) is arranged to extend out from the main support (200), and the first propping support (210) is in a shape of an inverted character " 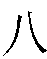 " and is configured to support a side frame (110) of the photovoltaic panel (100);
the second propping support (220) is arranged to extend out from the main support (200) and is configured to support an upper frame (120) of the photovoltaic panel (100); and
two ends of the main support (200) are arranged to extend out to form lifting portions (230) respectively, and the lifting portions (230) are configured for lifting the main support (200).

2. The photovoltaic assembly support system of claim 1, wherein a driving device (240) is provided on the main support (200), and the driving device (240) is configured to drive the main support (200) to turn along an axis of the main support (200).

3. The photovoltaic assembly support system of claim 1, wherein a pier foot (300) is provided on the main support (200), and the first propping support (210) is arranged to extend out from the pier foot (300) of the main support (200).

4. The photovoltaic assembly support system of claim 3, wherein the pier foot (300) comprises a first position-limiting portion (310) and a second position-limiting portion (320), and the first position-limiting portion (310) and the second position-limiting portion (320) are both configured to perform position-limiting on the first propping support (210).

5. The photovoltaic assembly support system of claim 1, wherein the first propping support (210) is connected to the side frame (110) through a first fixing member (2101).

6. The photovoltaic assembly support system of claim 5, wherein a first pressing block (2102) is provided on the first fixing member (2101), and the first pressing block (2102) is configured to fix the side frame (110) onto the first fixing member (2101).

7. The photovoltaic assembly support system of claim 1, wherein the second propping support (220) is trapezoidal, and the second propping support (220) is connected to the upper frame (120) through a second fixing member (2201).

8. The photovoltaic assembly support system of claim 7, wherein a second pressing block (2202) is provided on the second fixing member (2201), and the second pressing block (2202) is configured to fix the upper frame (120) onto the second fixing member (2201).

9. The photovoltaic assembly support system of claim 8, further comprising a counterweight block (400), wherein a lower end surface of the counterweight block (400) abuts against a ground or a roof plane, and the main support (200) is arranged to pass through the counterweight block (400).

10. The photovoltaic assembly support system of claim 1, wherein the second propping support (220) is in a shape of a character "Y", and the second propping support (220) is connected to the upper frame (120) through second fixing members (2201).
